(19) Europäisches Patentamt
European Patent Office
Office européen des brevets

(11) Publication number: 0 286 407 B1

(12) EUROPEAN PATENT SPECIFICATION

(45) Date of publication of patent specification: 04.12.91 Bulletin 91/49

(51) Int. Cl.[5]: A61J 1/03, B32B 27/28

(21) Application number: 88303118.9

(22) Date of filing: 07.04.88

# (54) Packaging material.

(30) Priority: 07.04.87 JP 85197/87

(43) Date of publication of application: 12.10.88 Bulletin 88/41

(45) Publication of the grant of the patent: 04.12.91 Bulletin 91/49

(84) Designated Contracting States: DE FR GB NL

(56) References cited:
EP-A- 0 166 243
FR-A- 2 201 671

(73) Proprietor: KUREHA KAGAKU KOGYO KABUSHIKI KAISHA
1-9-11, Nihonbashi, Horidome-cho
Chuo-ku Tokyo 103 (JP)

(72) Inventor: Suzuki, Masayasu
43-6 Yanagimachi Ushiroda-machi
Iwaki-shi Fukushima-ken (JP)
Inventor: Adachi, Yoshiaki
38-10 Shiroyone-Sakaihara Nakoso-machi
Iwaki-shi Fukushima-ken (JP)
Inventor: Kobori, Masaki
58 Yokomachi Ueda-machi
Iwaki-shi Fukushima-ken (JP)

(74) Representative: Woods, Geoffrey Corlett et al
J.A. KEMP & CO. 14 South Square Gray's Inn
London WC1R 5EU (GB)

EP 0 286 407 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a packaging material which is composed of a bottom material of a thermoplastic resin sheet or film (hereinafter, referred to as "sheet") having a concave portion formed therein and a cover material of a thermoplastic resin sheet or an aluminum foil which is bonded to the bottom material to seal in the concave portion the content thereof.

In conventional packages of tablets or the like, a PTP packaging (Press Through Pack) system in which the content comes out of the wrapping wall when the package is pressed with a finger is in general use in place of strip packaging systems.

Packages of tablets or granules are mainly used in the field of medicine. Most of the tablets are sugar-coated and most of the granules are encapsulated within gelatin so as to make the medicines easy to swallow. This is a disadvantage, however. The sugar or gelatin can easily absorb moisture. When it absorbs moisture, not only can not the object of the packaging be achieved but also some medicines may be damaged.

Packaging such tablets of medicine or the like is considered to require a water vapor permeability of not more than 1.0 $g/m^2 \cdot 24$ hr (at least 40°C and 90% RH) empirically. In order to satisfy this condition, so far, sheets of aluminum, polyvinyl chloride, polyvinylidene chloride, polypropylene, polyethylene, etc. or laminates thereof, which are materials having an excellent water vapor barrier property, are used for packaging tablet medicines or the like [see, for example, JP-A-58-217,344 (1983), JP-A-60-6,452 (1985) and JP-A-60-40,245 (1985)].

An aluminum foil, which has an excellent water vapor barrier property, should have thickness of not less than 10 μm, because if its thickness is less than 10 μm, pin holes are quite likely to exist on the foil and further, it is necessary to coat a heat sealable material on the foil in order to make the foil beat sealable with a bottomm sheet. Accordingly, the foil has the demerit of being expensive.

To satisfy the water vapor barrier property, a composite sheet consisting of several laminated layers having a basic composition, such as multiple layers of polyvinyl chloride/polyvinylidene chloride ; polypropylene/polyvinylidene chloride ; polyvinyl chloride/polyvinylidene chloride/polypropylene ; etc. is generally used. Such composite sheet is excellent in its transparency, but since it must be used in the form of a composite sheet formed by laminating multiple layers, the manufacturing process becomes complicated and expensive.

EP-A-0166243 discloses thermally resistant cookware formed from a thermoplastic material, said cookware comprising a tray having side walls with a peripheral flange extending around the upper edges of at least a portion thereof and which is covered by a metal foil or a thermoplastic resin sheet/metal foil laminate.

The metal foil may be aluminum foil. The thermoplastic material or resin sheet may be selected from a polyarylethersulfone, a polyl(aryl ether), polyarylate, polyetherimide, polyester, aromatic polycarbonate, styrene resin, poly(alkyl acrylate), polyhydroxyether, poly(arylene sulfide) and polyamide.

The present inventors have extensively studied to obtain a heat-sealable packaging material which is excellent in its water vapor barrier property and transparency. Finally, it has now been found that a sheet of a polyarylene sulfide coated with a latex of a vinylidene chloride copolymer can act as a very excellent packaging material.

Accordingly the present invention provides a packaging material which is composed of a bottom material of a first thermoplastic resin sheet having a concave portion thermally formed therein and a cover material of a second thermoplastic resin sheet or of an aluminium foil which is bonded to the bottom material to seal in the said concave portion the content thereof ; characterised in that the bottom material consists of a polyarylene sulfide sheet coated with a latex of a vinylidene chloride copolymer.

The invention also provides a process for the preparation of such a packaging material, which process comprises heating a polyarylene sulfide sheet coated with a latex of a vinylidene chloride copolymer to a temperature from the glass transition temperature to the melting point of the polyarylene sulfide and forming the said concave portion therein under a vacuum at a draw ratio of not more than 5 ; placing the desired content of the packaging material in the said concave portion ; covering the said concave portion with the said cover material, if necessary while filling the said concave portion with an inert gas ; and bonding the said bottom material and the said cover material together.

The invention further provides a packaging material comprising a bottom material composed of a thermally formed polyarylene sulfide sheet coated with a latex of a vinylidene chloride copolymer.

It is therefore possible to provide a packaging material which makes it possible to observe its content from outside and which prevents any damage to the content, particularly due to moisture. The packaging material uses a polyarylene sulfide sheet coaed with a latex of a vinylidene chloride copolymer as the bottom material.

The term "polyarylene sulfide" in the present invention means a polymer having a repeating unit of $\leftarrow$Ar-S$\rightarrow$ (wherein Ar represents an arylene group) as the main constituent. As an arylene group, paraphenylene group

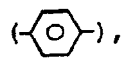

metaphenylene group

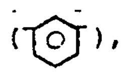

orthophenylene group

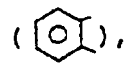

alkylsubstituted phenylene group

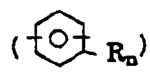

(wherein R represents an alkyl group, preferably a lower alkyl group, and n is an integer of 1 to 4), p,p'-diphenylene sulfone group

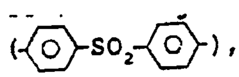

p,p'-biphenylene group

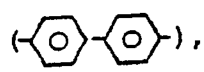

p,p'-diphenylene ether group

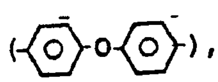

p,p'diphenylene carbonyl group

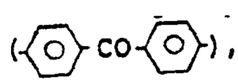

naphthalene group

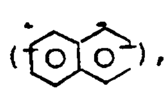

can be used.

Among these polyarylene sulfides, polyphenylene sulfide (hereinafter, referred to as "PPS") is the most preferable in respect to physical properties such as humidity resistance, moldability and mechanical properties. In the present invention, polyparaphenylene sulfide means not only a paraphenylene sulfide homopolymer but also a random or block copolymer in which the paraphenylene group constitutes not less than 60 mol%, preferably not less than 75 mol% of the total arylene groups. As the arylene groups other than the paraphenylene group, the above arylene groups can be used.

As a polyarylene sulfide (hereinafter, referred to as "PAS"), a PAS, having a melt viscosity of 100 to 1000 Pas (1,000 to 10,000) poise, preferably 200 to 800 Pas (2,000 to 8,000) poise measured at a temperature of 310°C and a shear rate of 200 second$^{-1}$, is generally used. A non cross-linked and substantially linear PAS is

preferable. Such a PAS can be produced basically by a method described in JP-A-61-7,332 (1986) and JP-A-61-66,720 (1986).

As the bottom material, a sheet of the PAS molded to a thickness of 30 to 1,000 μm, preferably 50 to 500 μm with an orientation as little as possible, is preferably used.

A strongly oriented sheet shrinks too much when heated for forming a bottom sheet and makes it difficult to obtain a clean one. When the sheet (strongly oriented) is heat-treated to reduce the shrinkage, its molding temperature must be higher than its heat-treating temperature and a high temperature at molding is not preferable

The PAS sheet is coated with a latex of a vinylidene chloride copolymer. Namely, one side of the PAS sheet is oxidized, usually with corona discharge. A polyurethane adhesive or a polyester adhesive is coated on the oxidized surface to a thickness in the range of 0.5 to 5 μm by appropriately arranging its coating weight. A laminate sheet is prepared by coating a latex of a vinylidene chloride copolymer on the adhesive layer in a thickness of 2 to 50 μm, preferably 3 to 20 μm, by solid content.

Such a coated PAS sheet is heated to a temperature in a range from the glass transition temperature to the melting point of the PAS, generally to a temperature of from 85 to 270°C, preferably from 100 to 200°C, to form a concave portion under a vacuum at a draw ratio of not more than 5. The "draw ratio" is represented by the ratio of the inside area of the concave portion (the total area of the bottom and the side walls) to the area of the sheet portion before forming which corresponds to the concave portion. After putting a tablet of a medicine or the like into the concave portion, it is covered with a sheet of thermoplastic resin, while filling the concave portion with an inert gas, if necessary, and the upper and lower sheets are bonded together by heat sealing or using an adhesive and the package is sealed airtightly.

As a cover sheet, i.e. a cover material, a sheet having the same thermoplastic resin on the surface to be bonded, as the thermoplastic resin on the surface, to be bonded, of the bottom sheet, typically is used. Preferably therefore the cover material and the bottom material have the same composition. The cover sheet may be thinner than that of the bottom sheet, and a cover sheet having a thickness of 10 to 200 μm is preferably used.

The PAS cover sheet may be the same as the PAS bottom sheet (non oriented or a little oriented), but it is not necessarily a non oriented sheet. In other words, a uniaxially oriented film and a biaxially oriented film are also usable. This is because the cover sheet is not thermally formed and is only exposed to heat for a very short time when it is heat sealed.

As the cover material, it is also possible to use an aluminum foil covered with the same material as that of the surface of the bottom sheet which is in contact with the medicine etc. or, with the material which can be heat sealed with the surface of the bottom sheet which is in contact with the medicine, etc.

A material, for example, medicine, packed in the packaging of the present invention has large advantages, namely, it can be seen at least from one side and is not damaged for a long time.

A PAS may be precolored by adding a pigment, etc. to intercept ultraviolet light, and may contain a filler, etc. in a range which does not damage the object of the present invention.

## Examples

The effectiveness of the present invention will be explained below with reference to the following Examples. Comparative Examples are also provided.

The tests of the physical properties in the examples were carried out by the following methods.

[Water vapor barrier property]

(1) The water vapor barrier property of a sheet was measured at 40°C and 90% RH in accordance with the method of JIS Z-0208, and represented by the water vapor permeability ($g/m^2 \cdot 24$ hr). The smaller the value is, the better is the water vapor barrier property.

(2) The concave portion of a sample sheet prepared by thermal vacuum forming was filled with 0.5 to 1 g of coffee granules which were sensible to humidity and change its color (light brown to dark brown) by humidity. The package containing coffee granules was sealed by heat sealing and a change in color of the granules with time was observed at 40°C and 90% RH.

[Transparency]

A sheet before vacuum forming was used as a sample and the haze of the sample due to white light was measured with JIS K-6714.

## Comparative Example 1 :

A non cross-linked PPS having a melt viscosity of 550 Pas (5,500) poise at a temperature of 310°C and a

shear rate of 200 second$^{-1}$ was used as a thermoplastic resin. The PPS was extruded through a T-die into a sheet of about 200 μm in thickness. The water vapor permeability of the sheet was as small as 0.8g/m$^2$ · 24 hour. After bringing into contact with a heated plate (150°C) for 5 seconds, the sheet was formed under vacuum using a concave metal mold having a rectangular shape with rounded corners and a size of 1 cm (depth) × 1 cm (width) × 2 cm (length). About 1 g of coffee granules were put into the concave portion of the sheet. A biaxially oriented PPS sheet of 50 μm in thickness, which had been stretched by 3 times both in the machine direction and the transverse direction at 100°C and heat treated at 200°C, was used as the cover material. The water vapor permeability of the sheet was 1.0 g/m$^2$ · 24 hr. The four edges of both sheets were sealed together by an impulse heat sealer. The sample was settled in a thermohygrostat of 40°C and 90% RH to observe a color change of the coffee sample with time.

Example 1

The same PPS as in Comparative Example 1 was extruded through a T-die into a sheet of about 100 μm in thickness. One side of the sheet was treated with corona discharge and coated with a polyurethane adhesive (a mixture of Takelac A-310 (Trade Mark) and Takenate A-3 (Trade Mark) : manufactured by TAKEDA Chemical Industries, Ltd ;) in a thickness of 0.5 μm by solid content. The solvent of the adhesive was removed by hot air of 80°C, and the surface was further coated with a latex of vinylidene chloride copolymer (Krehalon Latex DO-870 (Trade Mark), manufactured by KUREHA KAGAKU KOGYO K.K.) in a thickness of 6 μm by solid content. After the surface was dried at 80°C for 2 minutes, it was cured at 40°C for 20 hours to obtain a bottom material. The water vapor permeability of the composite sheet was 0.85 g/m$^2$ · 24 hours.

A biaxially oriented PPS sheet, in the same way as in Comparative Example 1, of 40 μm in thickness was used as a cover material. One surface of the sheet was treated with corona discharge and then, coated with the same adhesive used for the bottom material above in a thickness of 0.5 μm and further coated with Krehalon Latex DO-870 in a thickness of 6 μm both by solid contents. The sheet was dried and the cured at 40°C for 20 hours and its water vapor permeability was 1.0 g/m$^2$ · 24 hours.

The base material was heated with a heated plate (120°C) and vacuum-formed to have PPS layer outside of the concave portion. Coffee granules were put into the portion and the vinylidene chloride layers of both bottom and cover were heat sealed and obtained a sample.

Example 2

A sample was formed in the same way as in Example 1 except that an aluminum foil of 15 μm in thickness which is coated with an acrylic resin, was used as the cover material.

Comparative Example 2

A PPS was extruded through a T-die into a sheet having a thickness of 100 μm. One surface of the sheet was treated with corona discharge in the same way as in Example 1 and coated with a polyurethane adhesive (a mixture of Takelac A-130 and Takenate A-3) to a thickness of about 3 μm by solid content and was dried by hot air of 80°C for 1 minute. To the surface, a surface, treated with corona discharge, of an unoriented polypropylene sheet of 100 μm in thickness was brought into contact and press-bonded between rolls heated to 80°C. The obtained laminate sheet was used as a bottom material. The water vapor permeability of the material was 0.9 g/m$^2$ · 24 hours.

A biaxially oriented PPS sheet of 40 μm in thickness was used as a cover material. One surface of the sheet was treated with corona discharge and coated with the same adhesive above to a thickness of 3 μm by solid content. To the surface, a surface, treated with corona discharge, of an unoriented polypropylene sheet of 100 μm in thickness was brought into contact and press-bonded between rolls heated to 80°C. The water vapor permeability of the cover material was 1.0 g/m$^2$ · 24 hours.

The sheet for bottom was brought into contact with a heated plate (120°C) and vacuum-formed to have the polypropylene layer came into contact with a content.

Coffee granules were put into the concave portion and the polypropylene layers of both bottom and cover were heat-sealed

Comparative Example 3

A polyvinyl chloride sheet of 300 μm in thickness was used as the bottom material. A water vapor permeability of the sheet was 3 g/m$^2$ · 24 hours. The sheet was vacuum-forming at 120°C.

The same aluminum foil as in Example 2 was used as the cover material. After charging coffee granules into this packaging material, it was heat sealed. In the atmosphere of 40°C and 90% RH, color of the content, namely coffee, started to change to black brown on the 15th day.

Comparative Example 4

One surface of a polyvinyl chloride sheet of 100 μm in thickness was treated with corona discharge and coated with a polyurethane adhesive (a mixture of Takelac A-130 and Takenate A-3) in a thickness of about 1 μm by solid content and was dried by hot air of 60°C. The surface was further coated with a latex of a vinylidene chloride copolymer (Krehalon Latex DO-821 S (Trade Mark) : produced by KUREHA KAGAKU KOGYO K.K.) in a thickness of 6 μm by solid content and was dried by hot air of 60°C. The obtained sheet was cured at 40°C for 20 hours. Two rolls of the sheet (Sheet A) were prepared. The surface, coated with vinylidene chloride, of the Sheet A (one roll) was treated with corona discharge and coated with the same adhesive above in a thickness of 2 μm and dried by hot air of 60°C. To the surface, a surface, treated with corona discharge, of a polyethylene sheet of 30 μm in thickness was brought into contact and pressbonded between rolls having a temperature of not higher than 40°C. The polyethylene surface of the thus-laminated sheet was treated with corona discharge and designated as (Sheet C). The surface, coated with the vinylidene chloride copolymer, of the Sheet A (the other roll), was coated with the same adhesive above in a thickness of 2 μm by solid content and designated as (Sheet B). The polyethylene layer of the composite sheet (Sheet C) and the adhesive layer of the latter sheet (Sheet B) were brought into contact and press-bonded between rolls having temperatures of 40°C and 80°C, respectively. Consequently, a laminate sheet of five layers, namely, layers of polyvinyl chloride, the vinylidene chloride copolymer, polyethylene, the vinylidene chloride copolymer, and polyvinyl chloride laminated in that order was prepared. The water vapor permeability of the laminate sheet (5 layers) was 0.9 $g/m^2 \cdot 24$ hours and this sheet was used as the bottom material.

The obtained bottom material was heated by a heated plate (120°C), and vacuum-formed. Coffee granules were put into the concave portion and the package sample was sealed with the same aluminum foil as used in Example 2 as the cover material by heat sealing.

The results of the tests of each sheet obtained in Examples 1 and 2 and Comparative Examples 1 to 4 are shown in Table 1 together with the composition, water vapor permeability and transparency.

As is obvious from the results, the packaging material of the present invention has a very simple composition and is excellent both in transparency and in water vapor barrier property. Therefore, although PPS itself is rather expensive comparing with other resins, the packaging material of the present invention is good enough in practical use even costwise.

Table 1. Composition of Composite Sheets and Their Test Results

| Ex. No. | Material for Bottom | | | | | Material for Cover | | | Time for color change (day)* |
|---|---|---|---|---|---|---|---|---|---|
| | Composition | Thickness (μm) | No. of Layers | Water Vapor Permea-bility | Trans-parency (%) | Composition | Thickness (μm) | No. of Layers | |
| Comp. Example 1 | PPS | 200 | 1 | 0.8 | 1.2 | O-PPS | 50 | 1 | 45 |
| Example 1 | PPS/PVDC | 100/6 | 2 | 0.85 | 0.6 | O-PPS/PVDC | 40/6 | 2 | 60 |
| Example 2 | PPS/PVDC | 100/6 | 2 | 0.85 | 0.6 | Al | 15 | 1 | 65 |
| Comp. Example 2 | PPS/CPP | 100/100 | 2 | 0.9 | 4.7 | O-PPS/CPP | 40/100 | 2 | 50 |
| Comp. Example 3 | PVC | 300 | 1 | 3.0 | 2.0 | Al | 15 | 1 | 15 |
| Comp. Example 4 | PVC/PVDC/PE/ PVDC/PVC | 100/6/30/6/ 100 | 5 | 0.9 | 4.0 | Al | 15 | 1 | 55 |

* Days passed until the color of coffee changed.
PPS: Polyphenylene sulfide sheet. PVC: Polyvinyl chloride sheet
O-PPS: Biaxially oriented polyphenylene sulfide sheet. CPP: Unoriented polypropylene sheet
Al: Aluminum foil (with an acrylic resin applied). PE: Polyethylene sheet
PVDC: Vinylidene chloride copolymer.

**Claims**

1. A packaging material which is composed of a bottom material of a first thermoplastic resin sheet having a concave portion thermally formed therein and a cover material of a second thermoplastic resin sheet or of an aluminium foil which is bonded to the bottom material to seal in the said concave portion the content thereof; characterised in that the bottom material consists of a polyarylene sulfide sheet coated with a latex of a vinylidene chloride copolymer.

2. A packaging material according to claim 1, wherein the cover material and the bottom material have the same composition.

3. A packaging material according to claim 1 or 2, wherein the or each said polyarylene sulfide is a non cross-linked and substantially linear polymer.

4. A packaging material according to any one of the preceding claims, wherein the bottom material has a thickness of from 30 to 1,000 µm.

5. A packaging material according to any one of the preceding claims, wherein the or each said polyarylene sulfide is a polyphenylene sulfide.

6. A packaging material according to claim 5, wherein the polyphenylene sulfide is a polyparaphenylene sulfide homopolymer or a copolymer in which not less than 75 mol% of the total arylene groups are the paraphenylene group.

7. A packaging material according to any one of the preceding claims, wherein the cover material has a thickness of from 10 to 200 µm.

8. A packaging material according to any one of the preceding claims, wherein a tablet of a medicine is provided in the said concave portion.

9. A process for the preparation of a packaging material as claimed in any one of the preceding claims, with process comprises heating a polyarylene sulfide sheet coated with a latex of a vinylidene chloride copolymer to a temperature form the glass transition temperature to the melting point of the polyarylene sulfide and forming the said concave portion therein under a vacuum at a draw ratio of not more than 5 ; placing the desired content of the packaging material in the said concave portion ; covering the said concave portion with the said cover material, if necessary while filling the said concave portion with an inert gas ; and bonding the said bottom material and the said cover material together.

10. A packaging material comprising a bottom material composed of a thermally formed polyarylene sulfide sheet coated with a latex of a vinylidene chloride copolymer.

11. A packaging material according to any one of claims 1 to 8 or 10, wherein a coating of a polyurethane or polyester adhesive is present between the said polyarylene sulfide sheet and the coating of vinylidene chloride copolymer.

12. A packaging material according to any one of claims 1 to 8, 10 or 11, wherein the coating of vinylidene chloride copolymer is from 2 to 50 µm thick, by solid content of the latex.

13. A process according to claim 9, wherein a coating of a polyurethane or polyester adhesive is present between the said polyarylene sulfide sheet and the coating of vinylidene chloride copolymer.

14. A process according to claim 9 or 13, wherein the coating of vinylidene chloride copolymer is from 2 to 50 µm thick, by solid content of the latex.

**Patentansprüche**

1. Verpackungsmaterial, das aus einem Grundmaterial aus einer ersten thermoplastischen Harzbahn bzw. -schicht mit einem darin thermisch gebildeten konkaven Teil und einem Deckmaterial aus einer zweiten thermoplastischen Harzbahn bzw. -schicht oder einer Aluminiumfolie, die an das Grundmaterial zum Abdichten des Gehalts in dem konkaven Teil gebunden ist, zusammengesetzt ist, dadurch gekennzeichnet, daß das Grundmaterial aus einer Polyarylensulfidbahn bzw. -schicht, beschichtet mit einem Latex aus einem Vinylidenchlorid-Copolymer besteht.

2. Verpackungsmaterial nach Anspruch 1, worin das Deckmaterial und das Grundmaterial die gleiche Zusammensetzung besitzen.

3. Verpackungsmaterial nach Anspruch 1 oder 2, worin das oder jedes Polyarylensulfid ein unvernetztes und im wesentlichen lineares Polymer ist.

4. Verpackungsmaterial nach einem der vorhergehenden Ansprüche, worin das Grundmaterial eine Dicke von 30 bis 1000 µm besitzt.

5. Verpackungsmaterial nach einem der vorhergehenden Ansprüche, worin das oder jedes Polyarylensulfid ein Polyphenylensulfid ist.

6. Verpackungsmaterial nach Anspruch 5, worin das Polyphenylensulfid ein Polyparaphenylensulfid-Homopolymer oder -Copolymer ist, worin nicht weniger als 75 Mol-% der gesamten Arylengruppen die Paraphenylengruppe sind.

7. Verpackungsmaterial nach einem der vorhergehenden Ansprüche, worin das Deckmaterial eine Dicke von 10 bis 200 µm besitzt.

8. Verpackungsmaterial nach einem der vorhergehenden Ansprüche, worin eine Tablette aus einem Arzneimittel in dem konkaven Teil vorgesehen ist.

9. Verfahren zur Herstellung eines Verpackungsmaterials nach einem der vorhergehenden Ansprüche, das das Erwärmen einer Polyarylensulfidbahn bzw. -schicht, beschichtet mit einem Latex aus einem Vinylidenchlorid-Copolymer, auf eine Temperatur von der Glasübergangstemperatur bis zum Schmelzpunkt des Polyarylensulfids und das Bilden des konkaven Teils darin unter einem Vakuum bei einem Ziehverhältnis von nicht mehr als 5, das Geben der gewünschten Menge des Verpackungsmaterials in den konkaven Teil, das Bedecken des konkaven Teils mit dem Deckmaterial, wem notwendig, während der konkave Teil mit einem inerten Gas gefüllt wird, und das Verbinden des Grundmaterials und des Deckmaterials umfaßt.

10. Verpackungsmaterial, umfassend ein Grundmaterial, zusammengesetzt aus einer thermisch gebildeten Polyarylensulfidbahn bzw. -schicht, beschichtet mit einem Latex aus einem Vinylidenchlorid-Copolymer.

11. Verpackungsmaterial nach einem der Ansprüche 1 bis 8 oder 10, worin eine Beschichtung aus einem Polyurethan- oder Polyesterklebstoff zwischen der Polyarylensulfidbahn bzw. -schicht und der bedeckung aus Vinylidenchlorid-Copolymer vorliegt.

12. Verpackungsmaterial nach einem der Ansprüche 1 bis 8, 10 oder 11, worin die beschichtung aus Vinylidenchlorid-Copolymer eine Dicke von 2 bis 50 µm besitzt, bezogen auf den Feststoffgehalt des Latex.

13. Verfahren nach Anspruch 9, worin eine beschichtung aus einem Polyurehtan- oder Polyesterklebstoff zwischen der Polyarylensulfidbahn bzw. -schicht und der Beschichtung aus Vinylidenchlorid-Copolymer vorliegt.

14. Verfahren nach Anspruch 9 oder 13, worin die Beschichtung aus Vinylidenchlorid-Copolymer eine Dicke von 2 bis 50 µm besitzt, bezogen auf den Feststoffgehalt des Latex.

## Revendications

1. Matériau d'emballage composé d'un matériau de fond d'une première feuille de résine thermoplastique ayant une partie concave thermoformée et d'un matériau de recouvrement d'une seconde feuille de résine thermoplastique ou d'une feuille d'aluminium qui est liée au matériau de fond pour enfermer hermétiquement dans cette partie concave le contenu de celle-ci ; caractérisé en ce que le matériau de fond est constitué d'une feuille de poly (sulfure d'arylène) revêtue d'un latex d'un copolymère du chlorure de vinylidène.

2. Matériau d'emballage suivant la revendication 1, dans lequel le matériau de recouvrement et le matériau de fond ont la même composition.

3. Matériau d'emballage selon les revendications 1 ou 2, dans lequel le poly (sulfure d'arylène) ou chacun de ceux-ci est un polymère réticulé et pratiquement linéaire.

4. Matériau d'emballage selon l'une quelconque des revendications précédentes, dans lequel le matériau de fond a une épaisseur de 30 à 1000 µm.

5. Matériau d'emballage selon l'une quelconque des revendications précédentes, dans lequel le poly (sulfure d'arylène) ou chacun de ceux-ci est un poly (sulfure de phénylène).

6. Matériau d'emballage selon la revendication 5, dans lequel le poly (sulfure de phénylène) est un homopolymère ou un copolymère de poly (sulfure de paraphénylène) dans lequel pas moins de 75 moles% des groupes arylène totaux sont des groupes paraphénylène.

7. Matériau d'emballage selon l'une quelconque des revendications précédentes, dans lequel le matériau de recouvrement a une épaisseur de 10 à 200 µm.

8. Matériau d'emballage selon l'une quelconque des revendications précédentes, dans lequel un comprimé de médicament est introduit dans cette partie concave.

9. Procédé de préparation d'un matériau d'emballage selon l'une quelconque des revendications précédentes, lequel procédé comprend le chauffage d'une feuille de poly (sulfure d'arylène) revêtue d'un latex d'un copolymère de chlorure de vinylidène, à une température allant de la température de transition vitreuse au point de fusion du poly (sulfure d'arylène) et la formation dans celui-ci de cette partie concave, sous vide et avec un rapport d'étirage non supérieur à 5 ; l'introduction du contenu désiré pour le matériau d'emballage dans cette partie concave ; le recouvrement de cette partie concave avec ce matériau de recouvrement, si nécessaire en remplissant cette partie concave d'un gaz inerte ; et la liaison de ce matériau de fond et de ce matériau de recouvrement l'un avec l'autre.

10. Matériau d'emballage comprenant un matériau de fond composé d'une feuille de poly (sulfure d'arylène) thermoformée revêtue d'un latex d'un copolymère du chlorure de vinylidène.

11. Matériau d'emballage selon l'une quelconque des revendications 1 à 8 ou 10, dans lequel un revêtement d'un adhésif de polyuréthane ou de polyester est présent entre cette feuille de poly (sulfure d'arylène) et le revêtement du copolymère de chlorure de vinylidène.

12. Matériau d'emballage selon l'une quelconque des revendications 1 à 8, 10 ou 11, dans lequel le revêtement du copolymère de chlorure de vinylidène a une épaisseur de 2 à 50 µm, en teneur en matière solide du latex.

13. Procédé selon la revendication 9, dans lequel un revêtement d'un adhésif de polyréthane ou polyester est présent entre cette feuille de poly (sulfure d'arylène) et le revêtement de copolymère de chlorure de vinylidène.

14. Procédé selon les revendications 9 ou 13, dans lequel le revêtement de copolymère de chlorure de vinylidène a une épaisseur de 2 à 50 µm, en teneur en matière solide du latex.